# EUROPÄISCHE PATENTSCHRIFT

(11) **EP 3 986 779 B1**
(45) Veröffentlichungstag und Bekanntmachung des Hinweises auf die Patenterteilung: **06.08.2025**
(21) Anmeldenummer: 20733268.5
(22) Anmeldetag: 15.06.2020
(51) Int. Cl.: B62M 6/70

(54) **ANTRIEBSEINRICHTUNG UND FAHRZEUG**
DRIVE UNIT AND VEHICLE
SYSTÈME DE PROPULSION ET VÉHICULE

(30) Priorität: 18.06.2019 DE 102019116458
(43) Veröffentlichungstag der Anmeldung: 27.04.2022
(73) Patentinhaber: Aden GmbH, 73249 Wernau (DE)
(72) Erfinder: Lang, Günter, 73249 Wernau (DE)
(74) Vertreter: Rüger Abel Patentanwälte PartGmbB
(86) Internationale Anmeldenummer: PCT/EP2020/066510
(87) Internationale Veröffentlichungsnummer: WO 2020/254257

(56) Entgegenhaltungen:
- EP-A2- 0 838 391
- WO-A1-2015/113956
- WO-A1-2017/223256
- DE-A1- 102015 116 692
- JP-A- H1 179 059
- US-A- 6 011 366

## Beschreibung

Die Erfindung betrifft eine Antriebseinrichtung und ein mit einer solchen Antriebseinrichtung ausgestattetes Fahrzeug.

Fahrzeuge insbesondere, Fahrräder mit motorischem Hilfsantrieb sind aus dem Stand der Technik grundsätzlich bekannt. Beispielsweise offenbart die FR 867489 ein Fahrrad, dessen Hinterrad mit einem an den Speichen befestigten Ring verbunden sind. Auf diesen Ring wirkt ein Hilfsmotor mit einem Reibrad ein, um Antriebsleistung auf das Hinterrad des Fahrrads zu übertragen.

Die US RE 37583 E offenbart ein Fahrrad mit einem elektrischen Hilfsmotor, der auf einen mit dem Hinterrad verbundenen Zahnkranz einwirkt. Der Motor ist dabei von einem Motorträger getragen, der mit dem Fahrradrahmen fest verschraubt ist.

Einen ebenfalls elektromotorischen Hilfsantrieb für Fahrräder offenbart die DE 44 04 518 A1. Dieser Hilfsantrieb umfasst einen Elektromotor, der über ein Reibrad auf den Mantel des Vorderrads des Fahrrads einwirkt.

Aus der TW 2009 51021 ist ein elektrischer Vorderradantrieb eines Fahrrads bekannt, zu dem ein mit dem Vorderrad verbundener Zahnkranz gehört, auf den das Ritzel eines Elektromotors arbeitet.

Die WO 2012/032172 hingegen offenbart ein Fahrrad mit einem Hinterrad-Hilfsantrieb, zu dem ein mit den Speichen des Hinterrads verbundener Zahnkranz gehört. Dieser Zahnkranz weist Führungsbahnen für Laufrollen einer Motorträgerbaueinheit auf, die einen Elektromotor trägt. Dieser Elektromotor weist ein Antriebsritzel auf, das mit dem Zahnkranz kämmt. Der Motorträger ist mit dem Fahrradrahmen gelenkig verbunden, wobei die Gelenkverbindung lediglich als Drehmomentstütze für den Motor dient. Die Ausrichtung des Motors bestimmen die Laufbahnen und Führungsrollen des Zahnkranzes und des Motorträgers.

Mit diesem Konzept wurde ein wesentlicher Fortschritt im Hinblick auf die Zuverlässigkeit und Leistungsfähigkeit des Antriebs erreicht. Es ist aber zu beachten, dass die Zähne des Zahnkranzes, zumindest bei Geländeeinsatz, einer gewissen Verschmutzung unterliegen können.

Die US 2375508 zeigt einen Hilfsmotor für ein Fahrrad, wobei dieser Hilfsmotor über ein Ritzel mit einem Zahnkranz kämmt, der an den Speichen des Fahrrads anzubringen ist. Der Zahnkranz weist radial nach innen gerichtete Zähne auf, wodurch die Verschmutzungsneigung der Zähne vermindert ist.

Die DE 69730928 T2 nutzt hingegen als Kraftübertragung zwischen einem Getriebemotor und einem Rad eines Fahrrads einen Riemenantrieb. Dazu ist an den Speichen des angetriebenen Rads eine Riemenscheibe befestigt, der ein Zahnriemen zugeordnet ist. Dieser läuft über das Ritzel eines Getriebemotors. Der Motorträger ist mit dem Fahrradrahmen starr verbunden und verschraubt, um den Riemen straff zu halten.

Während sich der Zahnradantrieb sich durch geringe Leistungsverluste und somit einen hohen Übertragungswirkungsgrad auszeichnet, ist beim Riementrieb die typischerweise hohe Laufruhe hervorzuheben. Allerdings benötigt der Riementrieb normalerweise eine hohe Riemenspannung, um sicherzustellen, dass der Zahnriemen bei hohen Antriebsleistungen nicht springt, d.h., dass die Zähne des Zahnriemens insbesondere mit dem antreibenden Ritzel immer in sicherem Eingriff bleiben. Eine hohe Riemenvorspannung führt aber zu einer erheblichen Lagerbelastung, zu einer hohen Speichenbelastung sowie hohen Genauigkeitsanforderungen bezüglich des Rundlaufs des mit den Speichen verbundenen Antriebsrads und setzt außerdem den Übertragungswirkungsgrad herab.

Es ist deswegen Aufgabe der Erfindung, eine Antriebseinrichtung zu schaffen, die zumindest einem oder auch mehreren der Nachteile der vorgenannten Antriebskonzepte abhilft. Aus der gattungsgemäßen US 6,011,366 ist ein Fahrrad mit einem Elektroantrieb bekannt, der über ein Riemen auf eine am Hinterrad befestigte Riemenscheibe einwirkt. Der Elektroantrieb ist an dem Fahrradrahmen fest montiert.

Diese Aufgabe wird mit der Antriebsanordnung nach Anspruch 1 gelöst:
Die erfindungsgemäße Antriebsanordnung ist für ein Fahrzeug, insbesondere ein Zweiradfahrzeug, wie zum Beispiel ein Fahrrad vorgesehen. Die Antriebsanordnung kann jedoch auch an Dreirad-Fahrzeugen oder Mehrrädrigen Fahrzeugen, insbesondere Vierrad-Fahrzeugen verwirklicht sein. Dabei können ein oder mehrere Räder des jeweiligen Fahrzeugs mit einer solchen Antriebsanordnung versehen sein. Insbesondere eignet sich die erfindungsgemäße Antriebsanordnung als Hilfsantrieb für ein Fahrzeug mit Muskelantrieb.

Zu der Antriebsanordnung gehört ein Antriebsrad, das mit einem Rad des Fahrzeugs zu verbinden ist. Das Antriebsrad kann beispielsweise ein Zahnkranz mit radial nach außen gerichteten Zähnen sein, die mit einem geeigneten Zugmittel, beispielsweise einer Kette oder einem Zahnriemen, in Eingriff überführbar sind. Die Zähne des Zahnkranzes oder sonstigen Zahnrads bilden die Zugmittel-Angriffsfläche.

Weiter gehört zu der Antriebsanordnung ein Zugmittel, wie beispielsweise die bereits genannte Kette oder ein Zahnriemen oder, falls gewünscht, auch ein reibend treibendes Zugmittel wie beispielsweise ein ungezahntes Kunststoff- oder Stahlband. Unabhängig von der konkreten Ausführung ist jedes Zugmittel ringförmig geschlossen, wobei ein vollständiger Umlauf entlang des Zugmittels die Länge desselben bestimmt. Ein solches Zugmittel wird auch als "endloses" Zugmittel bezeichnet.

Die Antriebsanordnung umfasst weiter einen Motorträger, an dem mindestens ein Elektromotor gehalten ist, der seinerseits treibend mit einem Treibrad verbunden ist. Dazu kann das Treibrad unmittelbar mit der Antriebswelle des Motors verbunden sein. Alternativ kann zwischen dem Treibrad und der Abtriebswelle des Motors ein Getriebe, insbesondere ein Untersetzungsgetriebe, angeordnet sein. Das Getriebe kann ein festes Übersetzungsverhältnis festlegend ausgebildet sein. Alternativ kann das Getriebe wechselbare Übersetzungen, d.h. "Gänge" aufweisen. Weiter kann zwischen dem Elektromotor und dem Treibrad eine Kupplung vorgesehen sein, um die Antriebsverbindung zwischen dem Motor und dem Treibrad herstellen und trennen zu können. Die Kupplung kann eine Freilaufkupplung, eine Schaltkupplung, eine Zahnkupplung, eine Reibungskupplung oder dergleichen sein.

Das Treibrad ist auf das Zugmittel abgestimmt, um mit diesen treibend in Eingriff zu kommen. So können das Antriebsrad und das Treibrad jeweils mit einer Verzahnung versehen sein, die zu einem zugeordneten Zahnriemen, einer zugeordneten Kette oder dergleichen passt. Ist das Zugmittel ein unprofiliertes Band, zum Beispiel ein Stahlband, können das Antriebsrad und das Treibrad als ungezahnte Rollen ausgebildet sein, die an ihrem Umfang eine im Wesentlichen zylindrische Reibfläche aufweisen, die die Zugmittel-Angriffsfläche bildet.

Zu der erfindungsgenmäßen Antriebsanordnung gehört außerdem wenigstens ein Abstützrad, das bezüglich des Motorträgers drehbar gelagert und an dem Antriebsrad abrollend angeordnet ist. Dieses Abstützrad dient dazu, den Motorträger gegen das Antriebsrad abzustützen. Dabei ist das Abstützrad insbesondere dazu geeignet, eine den Motorträger auf das Antriebsrad hin spannende Kraft abzustützen. Außerdem sichert dieses Konzept die Einhaltung einer passenden, abgesehen von Antriebskräften konstanten, Spannung des Zugmittels, was insbesondere dann von Bedeutung ist, wenn das Zugmittel eine gewisse konstante Vorspannung aufweisen soll. Ist beispielsweise das Treibrad nicht ganz zentrisch an den Speichen des Rades befestigt, folgt der Motorträger der (geringen) Exzentrizität des Treibrads, ohne dass dadurch Spannungsschwankungen in dem Zugmittel verursacht würden. Diese führt zu einem gleichmäßigen widerstandsarmen Lauf des von dem Treibrad, dem Zugmittel und dem Antriebsrad gebildeten Getriebes. Das mindestens eine Abstützrad stützt die Riemenspannung an dem Antriebsrad ab.

Vorzugsweise sind der Durchmesser des Antriebsrads, die Länge des Zugmittels und der Durchmesser des Treibrads so aufeinander abgestimmt, dass der Umschlingungswinkel β mit dem das Zugmittel das Antriebsrad umschlingt größer als 300° ist. Damit wird der weitaus größte Teil des Umfangs des Antriebsrads so von dem Zugmittel abgedeckt, dass eine Verschmutzung der Kontaktfläche zwischen Antriebsrad und Zugmittel, d.h., bei Zahnriemen, eine Verschmutzung der Verzahnung weitgehend ausgeschlossen ist.

Weiter hat es sich als vorteilhaft herausgestellt, wenn die Länge des Zugmittels höchsten so groß ist wie die Summe aus den Umfängen des Antriebsrads und des Treibrads. Es ist aber jedenfalls zweckmäßig, wenn die Länge des Zugmittels größer ist, als die zum Umspannen von Treibrad und Antriebsrad minimal erforderliche Länge. Insbesondere ist es zweckmäßig, das Zugmittel mittels mindestens eines Leitrades, vorzugsweise zweier Leiträder, an das Treibrad heranzudrücken, um den Umschlingungswinkel an dem Treibrad gegenüber einem frei gespannten Zugmittel zu erhöhen. Durch diese Maßnahme kann ein geeignetes Zugmittel, beispielsweise eine Kette oder insbesondere ein Zahnriemen, mit geringer oder ohne Vorspannung, geführt werden, um die Reib- und Walkverluste zu minimieren und andererseits doch ein Springen des Zahnriemens auf dem Treibrad zu verhindern. Außerdem wird die Abdeckung der Zähne von Treibrad und Antriebsrad durch den Zahnriemen soweit erhöht, dass im praktischen Betrieb keine störende Verschmutzung der Verzahnungen möglich ist. Die Leiträder können an dem Motorträger justierbar angeordnet sein, um die Zugmittel-Vorspannung einstellen zu können.

Das mindestens eine Abstützrad ist vorzugsweise an dem Motorträger frei drehbar gelagert. Es kann dabei koaxial zu dem Treibrad auf der Motorwelle frei drehbar oder auf gesonderten Lagerträgern frei drehbar gelagert sein.

Bei einer bevorzugten Ausführungsform ist an dem Antriebsrad wenigstens eine Laufbahn für das wenigstens eine Abstützrad ausgebildet. Es können an dem Antriebsrad auch mehrere solche Laufbahnen ausgebildet sein. Diese Laufbahnen können zu beiden Seiten der Verzahnung oder einer sonstigen, zum Eingriff mit dem Zugmittel vorgesehenen Zugmittel-Angriffsfläche angeordnet sein. Die Laufbahn kann dabei einen von der Zugmittel-Angriffsfläche abweichenden Durchmesser aufweisen. Vorzugsweise ist die Laufbahn eine Zylinderfläche. Dadurch wird ein leichtgängiger Lauf des Motorträgers auf dem Antriebsrad ermöglicht. Die Laufbahnen dienen den Abstützrädern als Schienen.

Weitere Einzelheiten vorteilhafter Ausführungsformen der Erfindung ergeben sich aus Ansprüchen sowie aus der nachfolgenden Beschreibung von erfindungsgemäßen Ausführungsbeispielen.

In der Zeichnung sind Ausführungsbeispiele der Erfindung dargestellt. Es zeigen:
Figur 1 ein Fahrrad mit elektrischem Hilfsantrieb, in schematisierter Seitenansicht,
Figur 2 den elektrischen Hilfsantrieb, in ausschnittsweiser schematisierter Ansicht,
Figur 3 eine Drehmomentstütze des Hilfsantriebs, in gesonderter ausschnittsweiser Darstellung,
Figur 4 eine Frontansicht des Hilfsantriebs, in ausschnittsweiser Schnittdarstellung,
Figur 5 eine abgewandelte Ausführungsform des erfindungsgemäßen Antriebs in schematischer Darstellung,
Figur 6 eine weitere abgewandelte Ausführungsform der erfindungsgemäßen Antriebsanordnung in Draufsicht und
Figur 7 die Antriebsanordnung nach Figur 6, in geschnittenere Frontansicht in vereinfachter Darstellung.

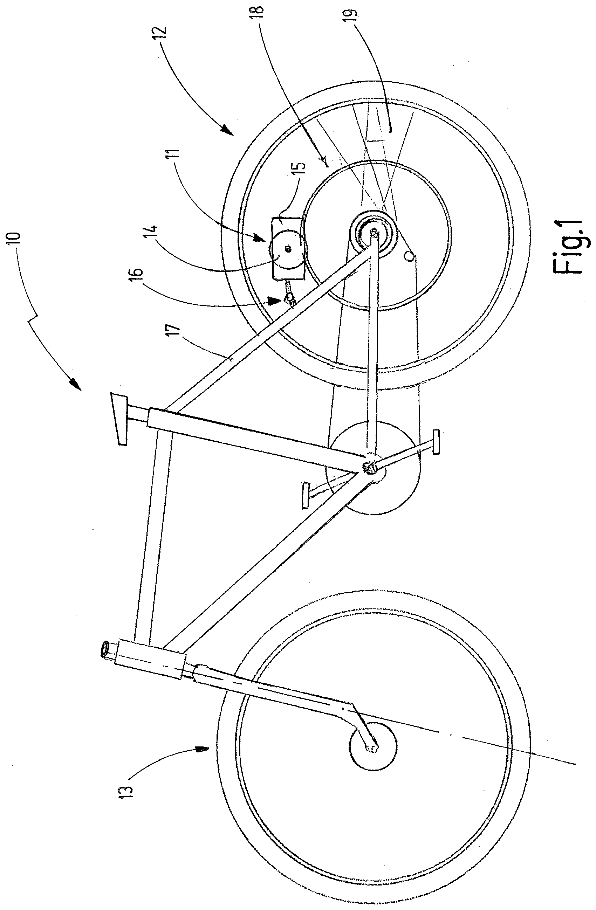

In Figur 1 ist ein Fahrrad 10 veranschaulicht, das hier lediglich beispielhaft zur Veranschaulichung der Erfindung herangezogen ist. Bei dem Fahrrad kann es sich um ein Kinderfahrrad, ein Jugendfahrrad, ein Fahrrad für Erwachsene, ein Lastenfahrrad, ein Trecking-Fahrrad, ein Tourenrad, ein Geländefahrrad oder auch um ein beliebiges ein, zwei oder mehrsitziges Fahrrad handeln. Auch kann die nachstehend beschriebene Erfindung an einem anderweitigen Fahrzeug, beispielsweise einem Roller, einer Rikscha, einem Fahrradanhänger oder an sonstigen Fahrzeugen mit oder ohne zusätzlichen Muskelantrieb Anwendung finden.

An dem Fahrrad 10 ist eine Antriebsanordnung 11 angebracht, die hier zum Antrieb des Hinterrads 12 des Fahrrads 10 dient. Alternativ oder zusätzlich kann eine solche Antriebsanordnung 11 jedoch auch am Vorderrad 13 des Fahrrads 10 oder sonstigen Zweiradfahrzeugs angebracht sein.

Die Antriebsanordnung 11 beinhaltet einen Elektromotor 14, der auf einem Motorträger 15 montiert ist oder dessen Gehäuse selbst als ein solcher Motorträger ausgebildet ist. Der Motorträger 15 ist über eine Gelenkverbindung 16 mit einer Rahmenstrebe 17 des Fahrrads 10 gelenkig verbunden. Die Gelenkverbindung 16 dient insbesondere der Abstützung des von dem Motorträger 15 ausgeübten Antriebsmoments, d.h. zur Abstützung des Antriebs-Gegenmoments. Vorzugsweise enthält die Gelenkverbindung 16 ein Gelenk, das sowohl eine Auf- und Abbewegung des Motorträgers 15 als auch zumindest eine gewisse Schwenkbewegung zu dem Rad 12 hin und von diesem weg gestattet. In zumindest geringem Maß kann die Gelenkverbindung auch eine Schwenkbewegung des Motorträgers 15 um eine längs zur Verbindung liegende Achse ermöglichen, die tangential zu dem Antriebsrad 18 liegt. In diesem Fall bildet die Gelenkverbindung 16 ausschließlich die Drehmomentabstützung des Motorträgers.

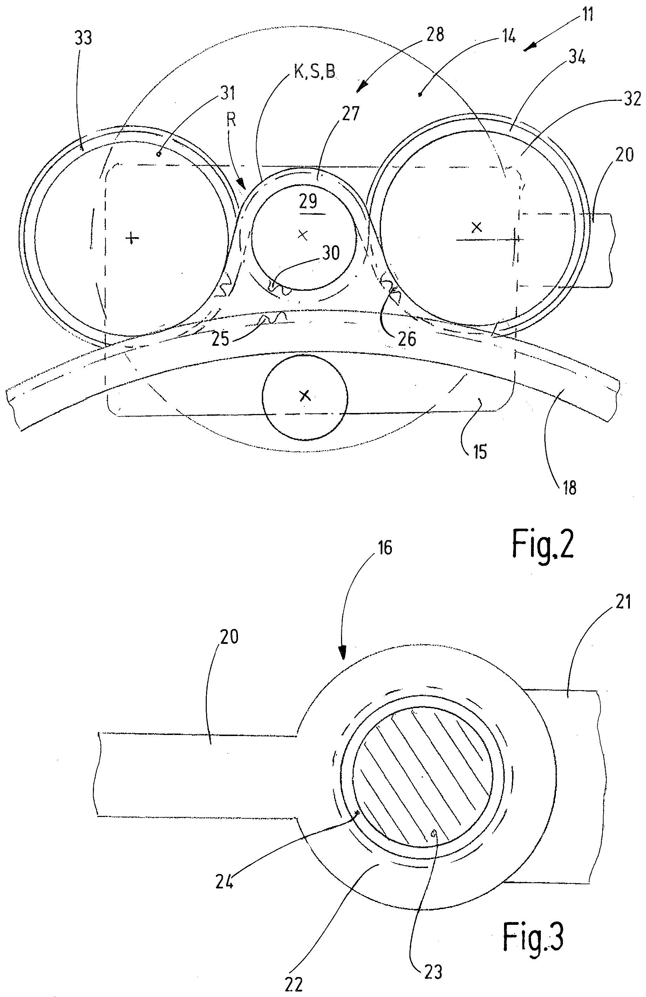

Zu der Antriebsanordnung 11 gehört ein Antriebsrad 18, das vorzugsweise als Ring ausgebildet ist, der mit Speichen 19 des Rads 12 verbunden, beispielsweise verschraubt ist. Eine anderweitige Ausbildung und Anbringung des Antriebsrads 18 ist jedoch möglich. Das ringförmige Antriebsrad 18 ist dabei vorzugsweise soweit zentriert an den Speichen 19 des Rads 12 angebracht, dass es ohne wesentliche Exzentrizität rund läuft. Jedoch sind kleinere Exzentrizitäten von zum Beispiel 1 mm weitgehend unschädlich. Der Motorträger 15 folgt einer solchen Exzentrizität mit einer entsprechenden Schwenkbewegung. Dazu veranschaulicht Figur 3 die Gelenkverbindung 16 in teilweiser geschnittener Darstellung. Wie erkennbar, ist zwischen zwei Streben 20, 21 ein Gelenk ausgebildet, zu dem eine Öse 22 gehört, durch deren Öffnung sich ein in Figur 3 geschnitten dargestellter Bolzen 23 erstreckt. Der Bolzen ist dabei vorzugsweise parallel zu der Drehachse des Hinterrads 12 orientiert.

Die Öse 22 ist vorzugsweise mit einer an der Wandung ihrer Öffnung entlang führenden Ringnut versehen, von der ein Dämpfungs- und Pufferelement 24 beispielsweise in Gestalt eines O-Rings ausgenommen ist. Dieses Pufferelement 24 dämpft Stöße und Vibrationen und trägt erheblich zur Laufruhe der Antriebseinrichtung 11 bei. Außerdem ist der zylindrische Bolzen 23 vorzugsweise länger als die Öse, so dass die Öse 22 längs des Bolzens 23 und somit parallel zu der Drehachse des Rades 12 verschiebbar ist. Die Öse 22 ist um alle drei Schwenkfreiheitsgrade jeweils wenigstens geringfügig schwenkbeweglich.

Die Antriebsanordnung ist im Weiteren in Figur 2 veranschaulicht. Wie erkennbar, ist das Antriebsrad 18 als außenverzahnter Ring ausgebildet, dessen Verzahnung 25 zur Verzahnung 26 eines als Zahnriemen 27 ausgebildeten Zugmittels 28 passt. Die Verzahnung bildet die Zugmittel-Angriffsfläche Der Zahnriemen 27 ist über ein Treibrad 29 geführt, das im vorliegenden Ausführungsbeispiel direkt mit der Abtriebswelle des Elektromotors 14 verbunden ist. Bedarfsweise kann zwischen dem Treibrad 29 und der Abtriebswelle des Elektromotors 14 jedoch auch ein Getriebe, insbesondere ein Untersetzungsgetriebe, eine Freilaufkupplung oder eine sonstige Kupplung angeordnet sein. Das Treibrad 29 weist eine Verzahnung 30 auf, die zur Verzahnung 26 des Zahnriemens 27 passt.

Auf dem Motorträger 15 sind außerdem mindestens ein, vorzugsweise zwei, Leiträder 31, 32 angeordnet, die mit der ungezahnten, von dem Treibrad 29 und dem Antriebsrad 18 abgewandten Außenseite des Zahnriemens 27 oder sonstigen Zugmittels 28 in Anlage stehen. Wenigstens eines der Leiträder 31, 32 ist an dem Motorträger 15 beispielweise über ein LAngloch oder einen Exzenter justierbar angeordnet, um die Riemenvorspannung einstellen zu können. Sie dienen dazu, den Zahnriemen 27 (oder das sonstige Zugmittel 28) so weit an das Treibrad 29 heranzudrücken, dass dort der Umschlingungswinkel, mit dem der Zahnriemen 27 das Treibrad 29 berührt, größer, vorzugsweise deutlich größer, als 90°, z.B. größer als 130° ist. Die Länge des Zugmittels 28 ist dabei vorzugsweise nicht größer als die Summe aus dem Umfang des Antriebsrads 18 und in Umgang des Treibrads 29. Jedoch ist die Länge des Zugmittels 28 größer als die kürzeste Umspannung vom Treibrad 29 und Antriebsrad 18. Eine solche Umspannung wird erhalten, wenn die beiden Leiträder 31, 32 fehlen und das Antriebsrad 18 und das Treibrad 29 mit einem kürzest möglichen Zugmittel 28 umspannt sind. Vorzugsweise ist die Länge des Zugmittels 28 größer als die Summe aus der kürzesten Umspannung von Treibrad 29 und Antriebsrad 18 und dem halben Umfang des Treibrads 29.

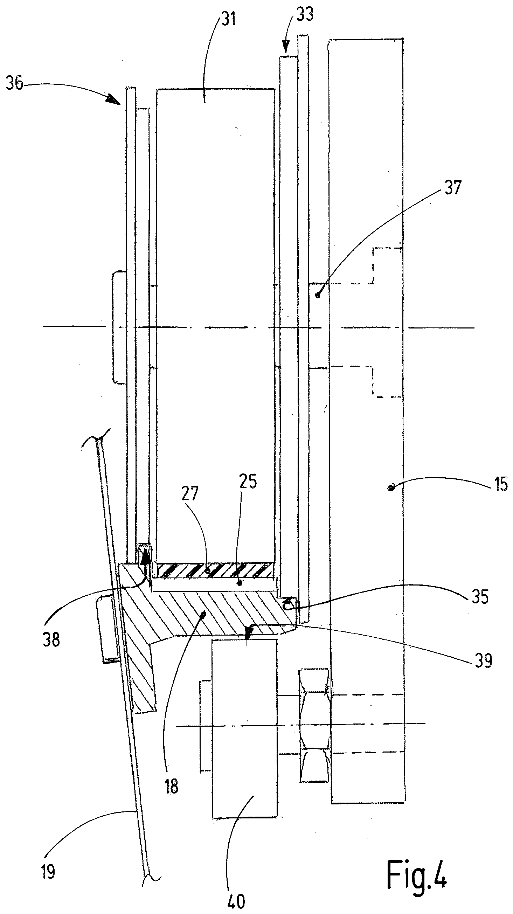

Zu der Antriebsanordnung 11 gehören außerdem mindestens ein, vorzugsweise zwei Abstützräder, die mit den Leiträdern 31, 32 auf gleicher Achse, jedoch unabhängig von diesen drehbar gelagert sein können. Diese Abstützräder können bedarfsweise auch an anderer Stelle angebracht sein. Die Abstützräder 33, 34 laufen, wie aus Figur 4 am Beispiel des Abstützrads 33 erkennbar ist, auf einer dazu vorgesehenen vorzugsweise etwa zylindrischen Lauffläche 35, die an dem Antriebsrad 18 ausgebildet ist. Vorzugsweise ist die Laufbahn 35 dabei zwischen der Verzahnung 25 oder sonstigen Zugmittel-Angriffsfläche und dem Motorträger 15 ausgebildet. Sie dient der Abstützung des Motorträgers 15 an dem Antriebsrad 18 und dabei insbesondere auch zur Beseitigung von Biegemomenten, die das Antriebsrad 18 und mit diesem die Speichen 19 verformen könnten. Das Abstützrad 33 ist, wie bereits erwähnt, gegen das Leitrad 31, vorzugsweise frei drehbar.

Alternativ oder zusätzlich zu dem Abstützrad 33 kann ein Abstützrad 36 vorgesehen sein, das zum Beispiel auf gleichem Bolzen 37 wie das Leitrad 31 und das Abstützrad 33 unabhängig von diesen drehbar gelagert ist. Dem Abstützrad 36 kann eine Lauffläche 38 zugeordnet sein, die konzentrisch zu der Drehachse des Antriebsrads 18 zum Beispiel an einem radial nach außen vorstehenden Flansch desselben ausgebildet ist. Die Bauform der Antriebsanordnung 11, bei der auf beiden Seiten des Zugmittels 28 bzw. der Zugmittel-Angriffsfläche jeweils mindestens ein Abstützrad 33, 36 vorgesehen ist, wird bevorzugt. Diese Bauform ist frei von auf den Motorträger 15 einwirkenden Kippmomenten. Die Gelenkverbindung 16 kann deswegen Freiheitsgrade um alle drei räumlichen Schwenkachsen aufweisen. Der Motorträger wird hinsichtlich der drei Schwenk-Freiheitsgrade ausschließlich von dem Antriebsrad 18 geführt. Infolge der Verschiebbarkeit der Öse 22 auf dem Bolzen 23 weist die Gelenkverbindung vorzugsweise zusätzlich einen linearen Bewegungs-Freiheitsrad parallel zu den Drehachsen des Rads 12 sowie des Treibrads 29 auf.

Wie Figur 4 weiter zeigt, kann das ringförmige Antriebsrad 18 an seiner radial innen liegenden Seite eine Lauffläche 39 aufweisen, der eine an dem Motorträger 15 drehbar gelagerte Stützrolle 40 zugeordnet ist. Diese kann so justiert sein, dass sie mit der Lauffläche 39 in Anlage steht oder einen geringen Luftspalt mit dieser bildet. Die Stützrolle 40 kann insbesondere dazu genutzt werden, das Antriebs-Gegenmoment, oder zumindest einen Teil desselben, von dem Motorträger 15 auf das Antriebsrad abzuleiten und/oder ein Kippen des Motorträgers 15 um eine parallel zu der Drehachse des Treibrads 29 liegende Drehachse zu vermeiden oder einzuschränken. Dies sichert den fehlerfreien Lauf des Zahnriemens 27 auch bei hohen Antriebsleistungen und zugleich geringen Riemenvorspannungen.

Die insoweit beschriebene Antriebsanordnung 11 arbeitet wie folgt:
In Betrieb liegt der Zahnriemen 27 mit seiner Verzahnung 26 sowohl mit dem Antriebsrad 18 als auch mit dem Treibrad 29 in Eingriff befindlich ohne große oder mit geringer Vorspannung an diesen an. Die Leiträder 31, 32 halten den Zahnriemen 27 dabei mit dem Treibrad 29 und dem Antriebsrad 18 in Eingriff.

Bringt der Motor 11 Antriebsleistung auf, überträgt das Treibrad 29 nun über den Zahnriemen 27 ein Antriebmoment auf das Antriebsrad 18, wodurch dem Rad 12 eine Antriebsbewegung erteilt wird. Das dabei auf den Motorträger 15 einwirkende Gegenmoment wird über die Gelenkverbindung 16 auf die Rahmenstrebe 17 oder ein sonstiges rahmenfestes Fahrzeugteil übertragen und somit abgeleitet. Zugleich entsteht eine den Motorträger 15 an die Drehachse des Rads 12 heranziehende Kraft, die über die Abstützräder 33, 34 auf dem Antriebsrad 18 abgestützt und somit abgeleitet wird. Zusätzlich oder ersatzweise kann diese Kraft auch über entsprechende Abstützräder 36 abgeleitet werden.

Sollte der Motorträger 15 eine Tendenz haben, zum Beispiel aufgrund einer Exzentrizität des Antriebsrads 18 oder aufgrund dynamischer Belastungen, eine geringe Auf- und Abbewegung zu vollführen, gestattet ihm die Gelenkverbindung 16 diese Bewegung. Jedoch kann sich der Motorträger 15 aufgrund der Stützwirkung der Abstützräder 33, 34 (36) nicht so weit an das Antriebsrad annähern, dass der Zahnriemen 27 mit den Verzahnungen 25, 30 außer Eingriff käme. Umgekehrt verhindert der Zahnriemen 27, dass sich der Motorträger 15 zu weit von dem Antriebsrad 18 weg bewegt. Eine solche Bewegung wird zusätzlich durch die Stützrolle 40 verhindert, die dann phasenweise (oder auch dauernd) mit der Lauffläche 39 in Berührung kommen kann.

Vorzugsweise weisen die Abstützräder 33, 34 (36) jeweils Flansche auf, die zusätzlich zu der beschriebenen Radialführung des Motorträgers 15 eine Seitenführung, d.h. eine Führung bezogen auf die von der Öse 22 und dem Bolzen festgelegten Verschieberichtung erbringen. Damit ist die Antriebsanordnung 11 besonders robust und es wird sichergestellt, dass ein korrekter Lauf des Zahnriemens 27 über das Treibrad 29 und das Antriebsrad 18 in jedem Betriebszustand eingehalten wird. Fehlmontagen oder funktionsbeeinträchtigenden Dejustagen werden weitgehend ausgeschlossen.

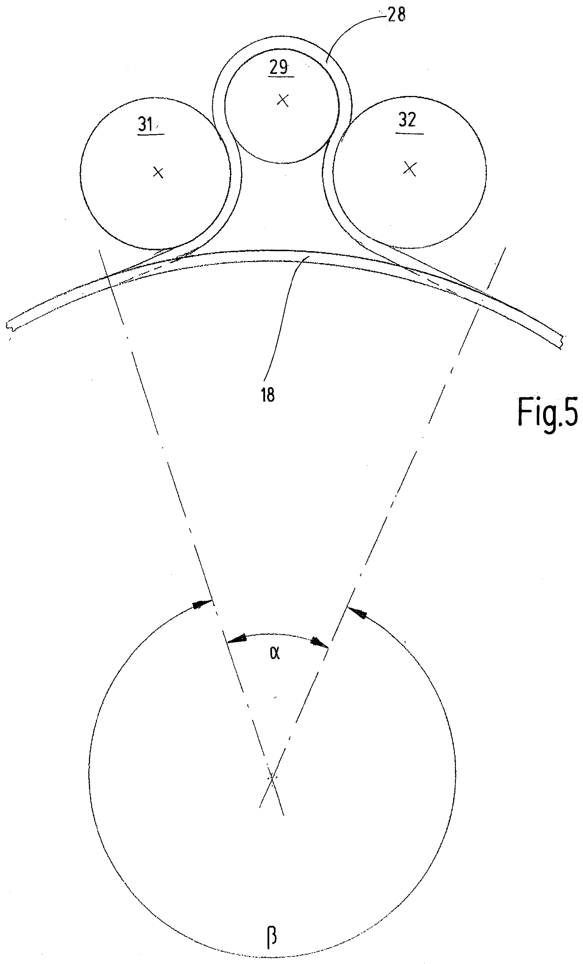

Die insoweit grundsätzlich beschriebene Antriebsanordnung kann in vielerlei Hinsicht abgewandelt werden. Zum Beispiel kann die Anordnung des Treibrads 29 sowie der Leiträder 31, 32 wie es Figur 5 schematisch veranschaulicht, variiert werden. Zum Beispiel können die Leiträder 31, 32 derart positioniert und die Länge des Zugmittels 28 so bemessen sein, dass der Umschlingungswinkel des Zugmittels 28 an dem Treibrad 29 größer als 180° wird. Dadurch wird ein Winkel α, mit welchem das Zugmittel 18 nicht vollständig an dem Antriebsrad 18 anliegt, vorzugsweise kleiner als 60°, weiter vorzugsweise kleiner als 50°. Damit ist der Umschlingungswinkel β, den das Zugmittel 28 an dem Antriebsrad 18 festlegt, vorzugsweise größer als 310° bis 320°.

Bei allen beschriebenen Ausführungsformen kann anstelle eines Zahnriemens ein Zugmittel 28 anderer Gestalt, beispielsweise eine Kette, ein Band, ein Seil oder dergleichen Anwendung finden. Ist das Zugmittel 28 ein Band, beispielsweise ein Stahlband, können die Leiträder 31, 32 unter einer Federspannung beispielsweise aufeinander zu vorgespannt sein, um eine ausreichend große Andruckkraft zwischen dem Zugmittel 28 und dem Treibrad 29 sowie dem Antriebsrad 18 zu generieren, um Schlupf zu vermeiden.

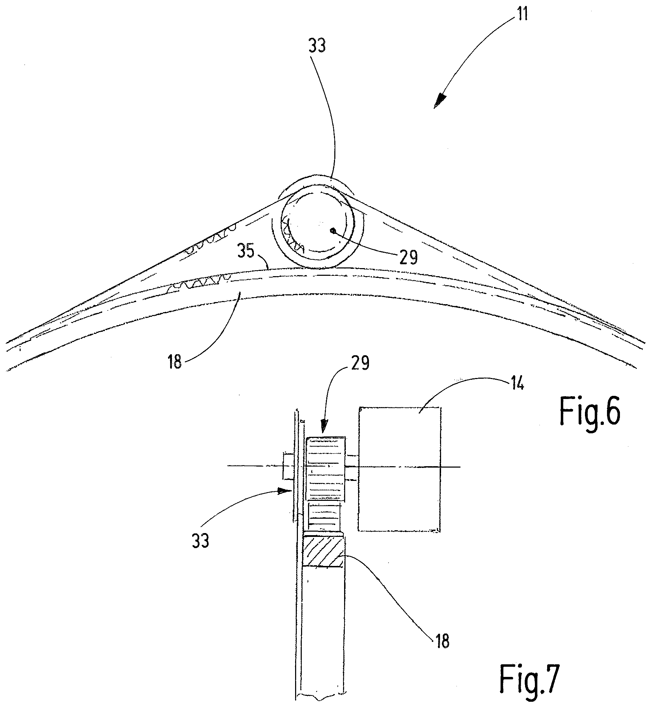

Eine vereinfachte Ausführungsform der Antriebsanordnung 11 ist in den Figuren 6 und 7 veranschaulicht. Bei dieser Ausführungsform fehlen die Leiträder. Das jedoch obligatorisch vorhandene mindestens eine Abstützrad 31 ist konzentrisch zu dem Treibrad 29 jedoch unabhängig von diesem drehbar gelagert angeordnet. Das Abstützrad 31 stützt sich an einer entsprechenden Laufbahn 35 des Antriebsrads 18 ab. Es können mehrere Abstützräder zu einer oder zu beiden Seiten des Zugmittels 28 vorgesehen sein. Ansonsten gilt die vorstehende Beschreibung der Ausführungsformen nach Figur 1 bis 5 entsprechend.

Die in den Figuren 6 und 7 veranschaulichte Ausführungsform der Antriebsanordnung 11 eignet sich insbesondere für Antriebsanordnungen mit geringer Leistung und/oder Antriebsanordnungen, bei denen (anders als in Figur 6 und 7 dargestellt) die Durchmesser des Antriebsrads 18 und des Treibrads 29 nicht zu unterschiedlich sind, d.h. das Durchmesserverhältnis liegt im Bereich von 1:1 bis 1:5.

Die erfindungsgemäße Antriebsanordnung 11 für Zweiradfahrzeuge umfasst einen an dem Fahrzeug beweglich gelagerten Motorträger 15 mit einem Elektromotor 14, der mit einem Treibrad 29 antreibend verbunden ist. Dem Rad 12 des Fahrzeugs ist ein Antriebsrad 18 zugeordnet, das beispielsweise als zu der Drehachse des Rads 12 konzentrisch angeordneter Ring ausgebildet ist. Das Treibrad 29 und das Antriebsrad 18 sind über ein Zugmittel 28, zum Beispiel einen in sich geschlossenen Zahnriemen 27, eine in sich geschlossene Kette, ein in sich geschlossenes Band oder dergleichen, treibend miteinander verbunden. Der Motorträger 15 weist mindestens ein, vorzugsweise mehrere Abstützräder 33, 34, 36 auf, sowie gegebenenfalls eine Stützrolle 40, über die der Motorträger wie ein Schienenfahrzeug auf dem ringförmigen Antriebsrad 18 läuft. Die Radialposition des Motorträgers 15 in Bezug auf die Drehachse des Rads 12 wie auch die Axialposition (auf das Rad 12 hin und von diesem weg) wird durch das Zusammenwirken der Abstützräder 33, 34, 36 und entsprechender Laufbahnen 35, 38 sowie gegebenenfalls einer Lauffläche 39 des Antriebsrads 18 bestimmt.

Die insoweit beschriebene Antriebsanordnung ist insoweit besonders laufruhig, dabei leichtgängig und unempfindlich gegen Verschmutzung.

### Bezugszeichen:

- 10: Fahrrad
- 11: Antriebsanordnung
- 12: Hinterrad
- 13: Vorderrad
- 14: Elektromotor
- 15: Motorträger
- 16: Gelenkverbindung
- 17: Rahmenstrebe
- 18: Antriebsrad
- 19: Speichen
- 20: Strebe
- 21: Strebe
- 22: Öse
- 23: Bolzen
- 24: Dämpfungs- und Pufferelement (O-Ring)
- 25: Verzahnung des Antriebsrads 18
- 26: Verzahnung des Zahnriemens 27
- 27: Zahnriemen
- R: Rückseite des Zahnriemens 27 oder Zugmittels 28
- 28: Zugmittel (auch Kette K, Seil S, Band B))
- 29: Treibrad
- 30: Verzahnung des Treibrads 29
- 31: Leitrad
- 32: Leitrad
- 33: Abstützrad
- 34: Abstützrad
- 35: Laufbahn
- 36: Abstützrad
- 37: Bolzen
- 38: Laufbahn
- 39: Lauffläche
- 40: Stützrolle

## Patentansprüche

1. Antriebsanordnung (11) für ein Zweiradfahrzeug, insbesondere Fahrzeug (10) mit Muskelantrieb, mit einem an dem Fahrzeug (10) drehbar gelagerten Rad (12),
mit einem Antriebsrad (18), das an dem Rad (12) befestigbar ist,
mit einem Zugmittel (28), das das Antriebsrad (18) umschlingend angeordnet ist,
mit einem Elektromotor (14), der an einem Motorträger (15) befestigt ist und der treibend mit einem Treibrad (29) verbunden ist, das mit dem Zugmittel (28) in Eingriff stehend angeordnet ist,
**gekennzeichnet durch**
wenigstens ein Abstützrad (33), das bezüglich des Motorträgers (15) drehbar gelagert und an dem Antriebsrad (18) abrollend angeordnet ist,
wobei der Motorträger (15) mit einem Rahmenteil (17) des Fahrzeugs (10) gelenkig verbunden ist.

2. Antriebsanordnung nach Anspruch 1, **dadurch gekennzeichnet, dass** der Durchmesser des Antriebsrades (18), die Länge des Zugmittels (28) und der Durchmesser des Treibrades (29) so aufeinander abgestimmt sind, dass der Umschlingungswinkel β, mit dem das Zugmittel (28) das Antriebsrad (18) umschlingt, größer als 300° ist.

3. Antriebsanordnung nach einem der vorstehenden Ansprüche, **dadurch gekennzeichnet, dass** die Länge des Zugmittels (28) höchstens so groß ist, wie die Summe des Umfangs des Antriebsrads (18) und des Umfangs des Treibrads (29).

4. Antriebsanordnung nach einem der vorstehenden Ansprüche, **dadurch gekennzeichnet, dass** das Zugmittel (28) eine Verzahnung (26) aufweist und dass sowohl das Antriebsrad (18) als auch das Treibrad (29) jeweils eine zu der Verzahnung (26) des Zugmittels (28) passende Verzahnung (25, 30) aufweisen.

5. Antriebsanordnung nach Anspruch 4, **dadurch gekennzeichnet, dass** das Zugmittel (28) ein Zahnriemen (27) oder eine Kette (K) ist oder dass das Zugmittel (28) als Seil (S) oder als Band (B) ausgebildet ist und dass sowohl das Antriebsrad (18) als auch das Treibrad (29) jeweils als Reibrad ausgebildet ist.

6. Antriebsanordnung nach einem der vorstehenden Ansprüche, **dadurch gekennzeichnet, dass** an der Motorträger (15) wenigstens ein drehbar gelagertes Gegenhalterrad (40) trägt, das einer radial nach innen weisenden Lauffläche (39) des ringförmigen Antriebsrads (18) zugeordnet ist.

7. Antriebsanordnung nach einem der vorstehenden Ansprüche, **dadurch gekennzeichnet, dass** dem Zugmittel (28) wenigstens ein Leitrad (31, 32) zugeordnet ist, das mit einer Rückseite (R) des Zugmittels (28) in Anlage steht.

8. Antriebsanordnung nach Anspruch 7, **dadurch gekennzeichnet, dass** das Leitrad (31, 32) an dem Motorträger (15) frei drehbar gelagert ist.

9. Antriebsanordnung nach einem der vorstehenden Ansprüche, **dadurch gekennzeichnet, dass** an dem Antriebsrad (18) wenigstens eine Laufbahn (35) für das Abstützrad (33, 34) ausgebildet ist.

10. Antriebsanordnung nach Anspruch 9, **dadurch gekennzeichnet, dass** die Laufbahn (35) eine Zylinderfläche ist.

11. Antriebsanordnung nach einem der Ansprüche 9 oder 10, **dadurch gekennzeichnet, dass** die Laufbahn (35) neben einer dem Zugmittel zugeordneten, z.B. als Verzahnung (25) ausgebildeten Kraftübertragungsfläche angeordnet ist.

12. Antriebsanordnung nach einem der Ansprüche 9 bis 11, **dadurch gekennzeichnet, dass** zu beiden Seiten der Kraftübertragungsfläche (25) Laufbahnen (35, 38) für Abstützräder (33, 36) angeordnet sind.

13. Antriebsanordnung nach Anspruch 7 oder 8, **dadurch gekennzeichnet, dass** das Leitrad (31) und das Abstützrad (33) koaxial zueinander angeordnet sind.

14. Antriebsanordnung nach Anspruch 13, **dadurch gekennzeichnet, dass** das Leitrad (31) und das Abstützrad (33) unabhängig voneinander drehbar gelagert sind.

15. Zweiradfahrzeug (10) mit einer Antriebsanordnung (11) nach einem der vorstehenden Ansprüche.

## Claims

1. Drive arrangement for a two-wheeled vehicle, in particular a vehicle with muscle drive with a wheel (12), rotatably mounted on the vehicle (10)
with a drive wheel (18), which is fastenable to the wheel (12),
with a traction means (28), which is arranged in a looping manner around the drive wheel (18),
with an electric motor (14), which is fastened to a motor support (15) and which is drivingly connected to a drive wheel (29), which is arranged in engagement with the traction means (28),
**characterized by**
at least one support wheel (33), which is rotatably mounted with respect to the motor support (15) and is arranged to roll on the drive wheel (18),
wherein the motor support (15) is connected in an articulated manner to a frame part (17) of the vehicle (10).

2. Drive arrangement according to claim 1, **characterized in that** the diameter of the drive wheel (18), the length of the traction means (28) and the diameter of the drive wheel (29) are adapted to one another in such a way that the wrapping angle β, which the traction means (28) wraps around the drive wheel (18) is greater than 300°.

3. Drive arrangement according to any of the preceding claims, **characterized in that** the length of the traction means (28) is at most as great as the sum of the circumference of the drive wheel (18) and the circumference of the drive wheel (29).

4. Drive arrangement according to any of the preceding claims, **characterized in that** the traction means (28) has a toothing (29) and **in that** both the drive wheel (18) and the drive wheel (29) each have a toothing (25, 30) matching the toothing (26) of the traction means (28).

5. Drive arrangement according to claim 4, **characterized in that** the traction means (28) is a toothed belt (27) or a chain (K) or **in that** the traction means (28) is designed as a rope (S) or as a band (B) and **in that** both the drive wheel (18) and the drive wheel (29) are each designed as a friction wheel.

6. Drive arrangement according to any of the preceding claims, **characterized in that** the motor support (15) carries at least one rotatably mounted counter holder wheel (40), which is assigned to a radially inwardly pointing runner surface (39) of the annular drive wheel (18).

7. Drive arrangement to any of the preceding claims, **characterized in that** the traction means (28) is assigned to at least one guide wheel (31, 32), which is in contact with a rear side (R) of the traction means (28).

8. Drive arrangement according to claim 7, **characterized in that** the guide wheel (31, 32) is freely rotatably mounted on the motor support (15).

9. Drive arrangement according to any of the preceding claims, **characterized in that** at least one track (35) for the support wheel (33, 34) is formed on the drive wheel (18).

10. Drive arrangement according to claim 9, **characterized in that** the track (35) is a cylindrical surface.

11. Drive arrangement according to any of claims 9 or 10, **characterized in that** the track (35) is arranged next to a force transmission surface assigned to the traction means, e.g. formed as toothing (25).

12. Drive arrangement according to any of the claims 9 to 11, **characterized in that** the track (35, 38) for support wheels (33, 36) are arranged on both sides of the force transmission surface.

13. Drive arrangement according to claim 7 or 8, **characterized in that** the guide wheel (31) and the support wheel (33) are arranged coaxially to one another.

14. Drive arrangement according to claim 13, **characterized in that** the guide wheel (31) and the support wheel (33) are rotatably mounted independently of one another.

15. Two-wheeled vehicle (10) with a drive arrangement (11) according to any of the preceding claims.

## Revendications

1. Ensemble d'entraînement (11) pour un véhicule à deux roues, en particulier un véhicule (10) avec un entraînement musculaire, avec une roue (12) logée de manière rotative au niveau du véhicule (10),
avec une roue d'entraînement (18) qui peut être fixée à la roue (12),
avec un moyen de traction (28) qui est agencé de manière à entourer la roue d'entraînement (18),
avec un moteur électrique (14) qui est fixé à un support de moteur (15) et qui est relié en propulsion à une roue motrice (29) qui est agencée en prise avec le moyen de traction (28),
**caractérisé par**
au moins une roue d'appui (33) qui est logée de manière rotative par rapport au support de moteur (15) et est agencée de manière à rouler au niveau de la roue d'entraînement (18),
dans lequel le support de moteur (15) est relié par articulation à une partie de cadre (17) du véhicule (10).

2. Ensemble d'entraînement selon la revendication 1, **caractérisé en ce que** le diamètre de la roue d'entraînement (18), la longueur du moyen de traction (28) et le diamètre de la roue motrice (29) sont adaptés les uns aux autres de sorte que l'angle d'enroulement β, avec lequel le moyen de traction (28) entoure la roue d'entraînement (18), est supérieur à 300°.

3. Ensemble d'entraînement selon l'une quelconque des revendications précédentes, **caractérisé en ce que** la longueur du moyen de traction (28) est au plus aussi grande que la somme de la périphérie de la roue d'entraînement (18) et de la périphérie de la roue motrice (29).

4. Ensemble d'entraînement selon l'une quelconque des revendications précédentes, **caractérisé en ce que** le moyen de traction (28) présente une denture (26) et **en ce que** aussi bien la roue d'entraînement (18) que la roue motrice (29) présentent respectivement une denture (25, 30) adaptée à la denture (26) du moyen de traction (28).

5. Ensemble d'entraînement selon la revendication 4, **caractérisé en ce que** le moyen de traction (28) est une courroie dentée (27) ou une chaîne (K) ou **en ce que** le moyen de traction (28) est formé comme câble (S) ou comme bande (B) et **en ce que** aussi bien la roue d'entraînement (18) que la roue motrice (29) sont formées respectivement comme roue de friction.

6. Ensemble d'entraînement selon l'une quelconque des revendications précédentes, **caractérisé en ce que** le support de moteur (15) porte au moins une roue de support antagoniste (40) logée de manière rotative, roue qui est associée à une surface de roulement (39) tournée radialement vers l'intérieur de la roue d'entraînement (18) annulaire.

7. Ensemble d'entraînement selon l'une quelconque des revendications précédentes, **caractérisé en ce qu'**au moins une roue directrice (31, 32) est associée au moyen de traction (28), roue qui est en appui avec un côté arrière (R) du moyen de traction (28).

8. Ensemble d'entraînement selon la revendication 7, **caractérisé en ce que** la roue directrice (31, 32) est logée de manière librement rotative au niveau du support de moteur (15).

9. Ensemble d'entraînement selon l'une quelconque des revendications précédentes, **caractérisé en ce qu'**au moins une bande de roulement (35) pour la roue d'appui (33, 34) est formée au niveau de la roue d'entraînement (18).

10. Ensemble d'entraînement selon la revendication 9, **caractérisé en ce que** la bande de roulement (35) est une surface cylindrique.

11. Ensemble d'entraînement selon l'une quelconque des revendications 9 ou 10, **caractérisé en ce que** la bande de roulement (35) est agencée à côté d'une surface de transmission de force associée au moyen de traction, formée par exemple comme denture (25).

12. Ensemble d'entraînement selon l'une quelconque des revendications 9 à 11, **caractérisé en ce que** des bandes de roulement (35, 38) pour des roues d'appui (33, 36) sont agencées des deux côtés de la surface de transmission de force (25).

13. Ensemble d'entraînement selon la revendication 7 ou 8, **caractérisé en ce que** la roue directrice (31) et la roue d'appui (33) sont agencées de manière coaxiale l'une à l'autre.

14. Ensemble d'entraînement selon la revendication 13, **caractérisé en ce que** la roue directrice (31) et la roue d'appui (33) sont logées de manière rotative indépendamment l'une de l'autre.

15. Véhicule à deux roues (10) avec un ensemble d'entraînement (11) selon l'une quelconque des revendications précédentes.
